# EUROPÄISCHE PATENTSCHRIFT

(11) **EP 1 957 177 B1**
(45) Veröffentlichungstag und Bekanntmachung des Hinweises auf die Patenterteilung: **16.06.2010**
(21) Anmeldenummer: 06791953.0
(22) Anmeldetag: 09.09.2006
(51) Int. Cl.: B01D 36/00

(54) **VERSCHLUSS-SYSTEM FÜR EINEN FLUIDBEHÄLTER, INSBESONDERE FÜR HYDRAULIKTANK**
CLOSURE SYSTEM FOR A FLUID VESSEL, ESPECIALLY FOR A HYDRAULIC TANK
SYSTEME DE FERMETURE POUR RECIPIENT A FLUIDES, EN PARTICULIER POUR CUVE HYDRAULIQUE

(30) Priorität: 01.12.2005 DE 102005057360
(43) Veröffentlichungstag der Anmeldung: 20.08.2008
(73) Patentinhaber: HYDAC FILTERTECHNIK GMBH, 66280 Sulzbach/Saar (DE)
(72) Erfinder: MÜLLER, Tobias, 66687 Wadern (DE); WILKENDORF, Werner, 66564 Ottweiler (DE); SANN, Norbert, 66292 Riegelsberg (DE)
(74) Vertreter: Bartels, Martin Erich Arthur
(86) Internationale Anmeldenummer: PCT/EP2006/008804
(87) Internationale Veröffentlichungsnummer: WO 2007/062704

(56) Entgegenhaltungen:
- DE-A1- 2 701 898
- DE-A1- 4 412 222
- US-A- 1 936 207

## Beschreibung

Die Erfindung bezieht sich auf ein Verschluss-System für einen Fluidbehälter, insbesondere Hydrauliktank, mit einem in eine Behälteröffnung einschraubbaren Stutzen, einem eine Belüftungs- und/oder Filtereinrichtung umschließenden Deckel und einer letzteren gegen ein ungewolltes Abnehmen von der Behälteröffnung schützenden Sicherheitseinrichtung.

Verschluss-Systeme dieser Art sind Stand der Technik. Die DE 42 34 232 C1 offenbart beispielsweise ein System dieser Art zur Verwendung an Hydrauliktanks bei Baumaschinen oder dergleichen. Da Baumaschinen und dergleichen häufig unbeaufsichtigt sind, beispielsweise nachts auf Baustellen verbleiben, besteht die Gefahr, dass unbefugte Personen, etwa bei Neigung zu Vandalismus, sich durch Abnehmen des Deckels Zugriff zur Tank- oder Behälteröffnung verschaffen und Schmutz oder sonstige Fremdstoffe in den Tank einfüllen um die Bau- oder Arbeitsmaschine zu beschädigen.

Als Sicherheitseinrichtung, die diesem Übel begegnen will, sieht die vorstehend genannte, bekannte Lösung vor, dass der Deckel mit dem Stutzen ständig endlos frei drehbar verbunden ist, während am Stutzen zwischen Deckel und Behälteröffnung eine Anlegefläche für einen Gabelschlüssel ausgebildet ist, mit dem der Stutzen im Flüssigkeitsbehälter verdreht werden kann.

Durch die frei drehbare Verbindung zwischen Deckel und Stutzen ist bei der bekannten Lösung tatsächlich verhindert, dass durch Drehen des Dekkels ein Herausschrauben des Stutzens aus der Behälteröffnung bewirkt werden kann, so dass der Deckel zusammen mit den gesamten, übrigen Systembestandteilen an der Behälteröffnung schützend verbleibt. Jedoch besteht die Möglichkeit, durch das Vorhandensein der für den Gabelschlüssel vorgesehenen Anlegeflächen das Gesamtsystem durch unbefugte Einwirkung auf den Stutzen zu entwenden, auch wenn bei der bekannten Lösung eine Ausbildung der Anlegeflächen in der Weise in Betracht gezogen ist, dass eine Zusammenwirkung nur mit einem von der Norm abweichenden Gabelschlüssel möglich ist.

In Weitergestaltung dieser bekannten Lösung ist durch die DE 44 12 222 C2 ein Filter bekannt mit einem in einem Flüssigkeitsbehälter eindrehbaren Stutzen, mit einem den Stutzen oberhalb des Flüssigkeitsbehälters überfangenden Deckel und mit mindestens einem Filterelement im Deckel, wobei der Deckel mit dem Stutzen frei drehbar verbunden ist. Dadurch, dass bei der bekannten Lösung am Stutzen und am Deckel miteinander korrespondierende Ausnehmungen ausgebildet sind, die durch Verdrehung des Dekkels miteinander ausrichtbar sind und dass der Deckel und der Stutzen durch ein in die miteinander ausgerichteten Ausnehmungen eingeführtes stiftförmiges Werkzeug drehfest miteinander verbindbar sind, ist der Filter mit einfachen Mitteln am Flüssigkeitsbehälter befestigbar und kann von diesem auch wieder gelöst werden; allein das stiftförmige Werkzeug kann verloren gehen, das aber bei einem Verlust gegebenenfalls durch ein einfaches Mittel, beispielsweise eine Nadel ersetzbar ist.

Im Hinblick auf diesen Stand der Technik liegt der Erfindung die Aufgabe zugrunde, ein Verschluss-System zur Verfügung zu stellen, das bei einfachem Aufbau und einfacher Bedienbarkeit eine erhöhte Sicherheit gegen mißbräuchliche Eingriffe (Vandalismus) bietet.

Erfindungsgemäß ist diese Aufgabe durch ein Verschluss-System für einen Fluidbehälter, insbesondere Hydrauliktank, gelöst, das die Merkmale des Patentanspruches 1 in seiner Gesamtheit aufweist.

Danach sieht die Erfindung als wesentlichen Unterschied zum Stand der Technik vor, dass eine Verriegelungsanordnung vorhanden ist, die ein Anschlussteil am Stutzen lösbar sichert, wobei dieses Anschlussteil als Bestandteil der Belüftungs- und/oder Filtereinrichtung seinerseits mit dem Deckel verbunden ist. Ein Entfernen des Deckels von der Behälteröffnung ist daher nur durch Betätigen, d. h. Lösen, der Verriegelungsanordnung zwischen Stutzen und Anschlussteil möglich. Diese Verriegelungsanordnung kann, wie nachstehend bei der anhand der Zeichnungen vorgenommenen, ins einzelne gehenden Beschreibung aufgezeigt wird, so gestaltet werden, dass ein unerwünschtes Lösen der Verriegelungsanordnung verhindert oder zumindest erschwert ist. Ferner bietet das zusätzliche adapterartige Anschlußteil ein weiteres Hemmnis der freien Zugänglichkeit zu der Behälteröffnung.

Bei vorteilhaften Ausführungsbeispielen ist die als Sicherheitseinrichtung dienende Verriegelungsanordnung so ausgebildet, dass sie das Anschlussteil am Stutzen gegen ein in Axialrichtung des Stutzens erfolgendes Abheben sichert, wobei als besonders vorteilhafte Lösung vorgesehen ist, dass die Verriegelungsanordnung das Anschlussteil kraft- oder formschlüssig sichert.

In vorteilhafter Weise kann das Anschlussteil so gestaltet sein, dass es als Sitz für die Belüftungs- und/oder Filtereinrichtung ein randseitig mit dem Deckel verbundenes Flanschteil aufweist, von dessen dem Deckel abgewandter Seite sich ein zentral gelegenes, in den Stutzen einsetzbares Anschlussrohr erstreckt, wobei in den Außenumfang des Anschlussrohres eine Vertiefung eingearbeitet ist, die für den Eingriff eines am Stutzen befindlichen Riegelgliedes vorgesehen ist.

Vorzugsweise ist diese Vertiefung durch eine umlaufende Ringnut an der Außenseite des Anschlussrohres gebildet.

In der bei derartigen Verschluss-Systemen üblichen Weise kann der Stutzen in seinem außerhalb der Behälteröffnung befindlichen Bereich, also an dem dem Anschlussteil zugekehrten Ende, einen Flansch aufweisen, in dem das Riegelglied derart angeordnet ist, dass es in eine Sperrstellung, in der es in die Ringnut eingreift, und eine Freigabestellung bringbar ist, in der es außer Eingriff mit der Ringnut ist. Bei einer anders ausgestalteten Verschluss-Systemlösung ist es des weiteren vorgesehen, dass als weitere Vertiefung in die umlaufende Ringnut mindestens eine Eingriffsstelle vorzugsweise in Form einer Bohrung eingebracht ist, in die das Riegelglied in einer Sperrstellung derart eingreift, dass es formschlüssig festgelegt ist. Dergestalt lassen sich besonders hohe Mitnahmekräfte für den Stutzen der Tankbehälteröffnung realisieren.

Das Riegelglied ist vorzugsweise eine Stiftschraube, die in einer im Flansch des Stutzens vorgesehenen Gewindebohrung vorgesehen ist. Das von der Außenseite her zugängliche Betätigungsende der Schraube kann so gestaltet sein, d. h. mit solcher Formgebung versehen sein, dass ein unerwünschtes Verdrehen der Schraube erschwert ist.

Bei einem besonders vorteilhaften Ausführungsbeispiel ist das Anschlussteil ein randseitig mit dem Deckel verbundener Ringkörper, an dessen dem Deckel abgewandter Seite ein den Außenumfang des Stutzens übergreifender Sicherungsrand angeformt ist, wobei die Verriegelungsanordnung zwischen Stutzen und Sicherungsrand wirksame Blockierelemente aufweist, um den Sicherungsrand lösbar gegen ein in Axialrichtung erfolgendes Abnehmen vom Stutzen zu sichern. Dadurch, dass die Außenseite des Flansches des Stutzens bei diesem Ausführungsbeispiel von dem Sicherungsrand übergriffen ist, der sich an dem mit dem Deckel verbundenen Anschlussteil befindet, ergibt sich eine besonders hohe Sicherheitswirkung, weil bei am Behälter angebrachtem Verschluss-System die Außenseite des Stutzens unzugänglich gemacht ist und somit bei im verriegelten Zustand befindlichem Verschluss-System auch ein mißbräuchliches Herausdrehen des Stutzens, verhindert ist.

Bei einer weiteren bevorzugten Ausführungsform des erfindungsgemäßen Verschluss-Systems ist vorgesehen, dass der Stutzen zwischen Deckel und Eingriffsbereich des Stutzens in eine Behälteröffnung (Tank) umfangseitig mit einem Hemmnis für ein Betätigungswerkzeug versehen ist, insbesondere mindestens eine konisch ausgebildete Übergangsfläche aufweist. Mit der dahingehenden Ausgestaltung wird der Ansatz eines Betätigungswerkzeuges verhindert, um so zu erschweren, dass der Stutzen für einen Vandalismusakt aus der Behälteröffnung entfernt werden kann. Im Sinne der Bedienerleichterung ist vorzugsweise ferner vorgesehen, zur Lagefeststellung der jeweiligen Eingriffsstelle eine Markierung am Deckel vorzusehen, die in Deckung bringbar ist mit dem jeweiligen Riegelelement für die zuordenbare Eingriffsstelle.

Nachstehend ist die Erfindung anhand von in der Zeichnung dargestellten Ausführungsbeispielen im einzelnen erläutert. Es zeigen:
- Fig. 1 eine Seitenansicht eines ersten Ausführungsbeispieles des erfindungsgemäßen Verschluss-Systemes, vom nicht gezeigten Behälter abgenommen dargestellt;
- Fig. 2 eine Draufsicht des Ausführungsbeispieles von Fig. 1;
- Fig. 3 und 4 einen Schnitt längs der Linie A-A in Fig. 1 bzw. längs der Linie B-B in Fig. 2;
- Fig. 5 eine gegenüber den Fig. 1 bis 4 stark vergrößert gezeichnete Ausschnittsdarstellung des Kreisausschnittes H in Fig. 3;
- Fig. 6 eine Schnittdarstellung eines Riegelgliedes für einen kraftschlüssigen Eingriff in die ringnutartige Eingriffsstelle nach Fig. 5;
- Fig. 7 eine gegenüber den Fig. 1 bis 4 stark vergrößert gezeichnete Ausschnittsdarstellung einer abgewandelten Ausführung gemäß Kreisausschnitt H in Fig. 3;
- Fig. 8 eine Schnittdarstellung eines Riegelgliedes für einen formschlüssigen Eingriff in die ringnutartige Eingriffsstelle nach Fig. 7;
- Fig. 9 einen der Fig. 3 ähnlichen Längsschnitt eines weiteren Ausführungsbeispiels des erfindungsgemäßen Verschluss-Systems;
- Fig. 10 eine Seitenansicht nur des Anschlussteils des weiteren Ausführungsbeispiels von Fig. 9;
- Fig. 11 eine Draufsicht lediglich des Stutzens des Ausführungsbeispiels von Fig. 9 und 10 und
- Fig. 12 einen der Fig. 9 entsprechenden Längsschnitt mit demgegenüber um 90° verdrehter Stellung des Anschlußteiles des Ausführungsbeispieles.

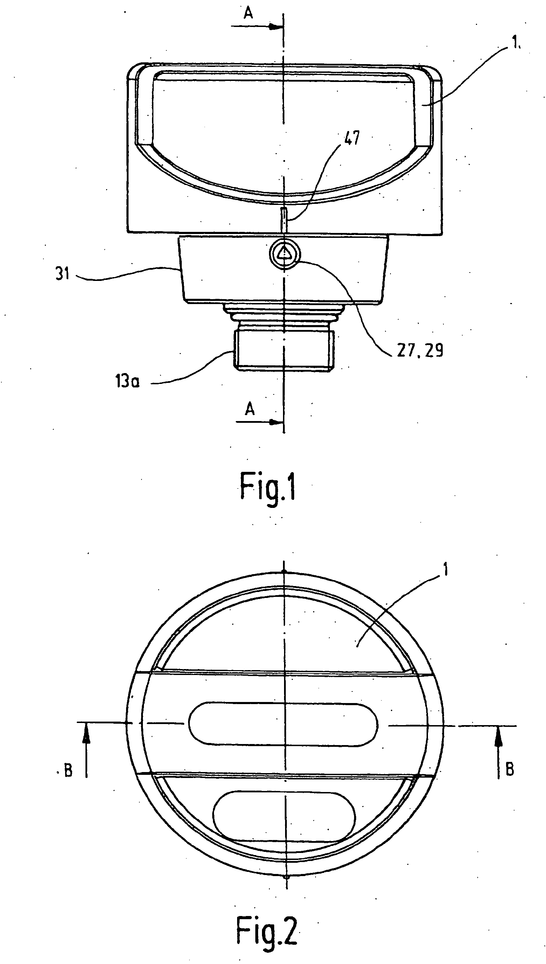

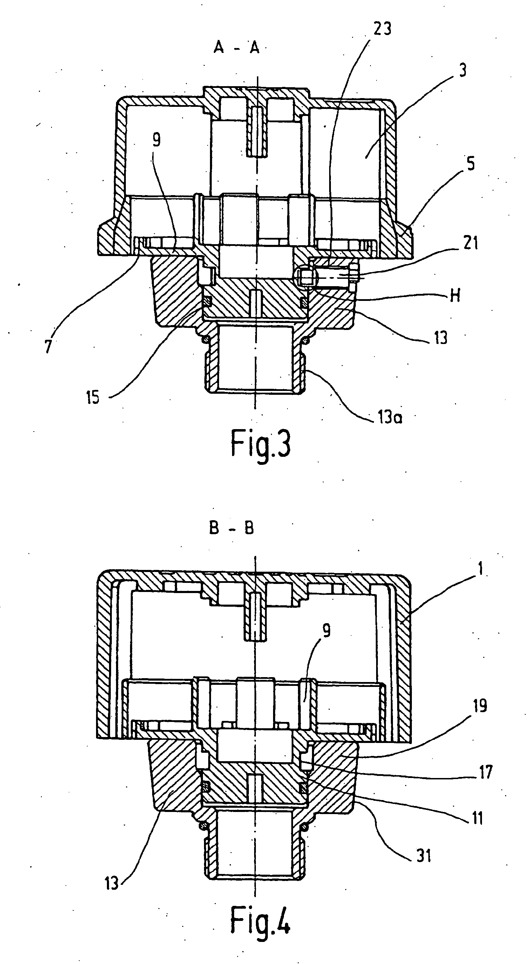

Fig. 1 bis 6 zeigen ein erstes Ausführungsbeispiel des erfindungsgemäßen Verschluss-Systemes, das abgenommen von einem zugehörigen Hydrauliktank dargestellt ist, der nicht gezeigt ist. In der bei derartigen Verschluss-Systemen üblichen Weise ist ein Deckel 1 vorgesehen, der napfförmig gestaltet ist und einen inneren Hohlraum umfasst, in dem die bei solchen Verschluss-Systemen üblichen Belüftungs- und/oder Filtereinrichtungen untergebracht sind, wobei lediglich andeutungsweise ein eingebautes Filterelement 3 in Fig. 3 dargestellt ist. Der Deckel 1 ist über eine mit 5 bezeichnete Schnappverbindung mit einem Flanschteil 7 eines Anschlussteiles 9 verbunden. Das Anschlussteil 9 weist im Zentrum einen axial vorspringenden Fortsatz in Form eines Anschlussrohres 11 auf. Dieses ist für die Herstellung einer Fluidverbindung zwischen Innenseite des Behälters (Tanks) und dem vom Deckel 1 umschlossenen Innenraum in den Stutzen 13 einsetzbar, der in die nicht gezeigte Behälteröffnung mittels eines Außengewinde 13a an seinem freien Ende einschraubbar ist. Ein Dichtring 15 ist zur Abdichtung zwischen Anschlussrohr 11 und Innenwand des Stutzens 13 vorgesehen.

Wie aus Fig. 3 und 4 zu ersehen ist, ist am Anschlussrohr 11 des Anschlussteiles 9 im Bereich zwischen dem Dichtring 15 und dem Flanschteil 7 eine Ringnut 17 in den Außenumfang des Anschlussrohres 11 eingearbeitet. Diese dient als Teil der Sicherheitseinrichtung, die in Zusammenwirkung mit einer Verriegelungsanordnung das in den Stutzen 13 eingesetzte Anschlussrohr 11 und damit das Anschlussteil 9 gegen ein Ausheben aus dem Stutzen 13 sichert. Der dem Stutzen 13 zugehörige Teil der Verriegelungsanordnung befindet sich in einem dem Anschlussteil 9 zugekehrten Flansch 19 des Stutzens 13.

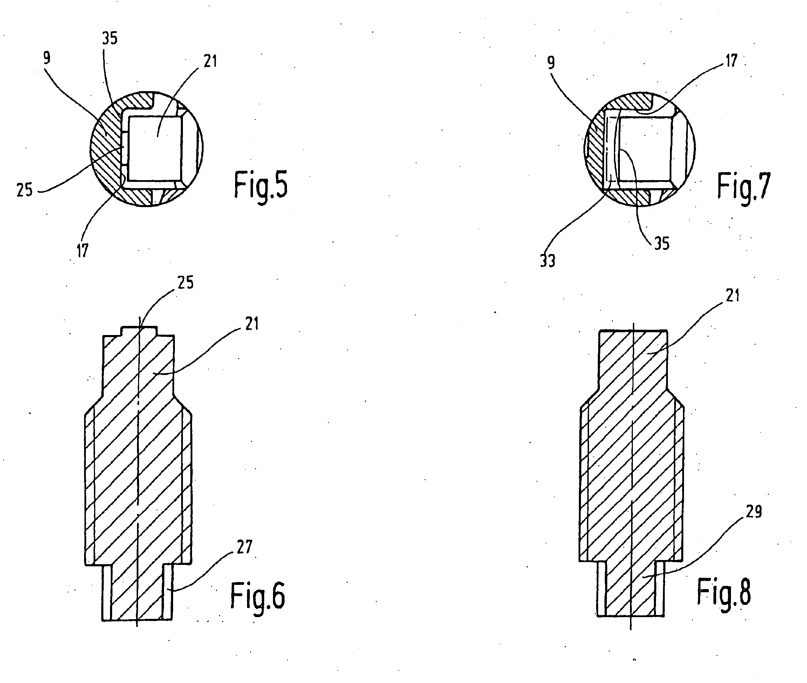

Bei dem ersten Ausführungsbeispiel von Fig. 1 bis 6 ist zu diesem Zweck eine Stiftschraube 21 als Riegelglied vorgesehen, die in einer radialen Gewindebohrung 23 im Flansch 19 des Stutzen 13 sitzt und am inneren Ende einen im Durchmesser abgesetzten Riegelstift 25 für den kraftschlüssigen Eingriff in die Ringnut 17 des Anschlussteiles 9 aufweist. Wie Fig. 1 und besonders deutlich die Fig. 5 und 6 zeigen, weist das außenseitige, am Außenumfang des Flansches 19 des Stutzens 13 zugängliche Ende 27 der Stiftschraube 21 einen Fortsatz 29 in Form eines Polygons spezieller Gestaltung auf, so dass das äußere Ende 27 der Stiftschraube 21 für die Drehbetätigung mittels eines normalen Werkzeuges nicht geeignet ist; ein unerwünschtes Verdrehen der Stiftschraube 21 somit erschwert ist.

Der Stutzen 13 seinerseits weist am Außenumfang des Flansches 19 keinerlei Anlegeflächen für übliche Drehwerkzeuge, wie Gabelschlüssel, auf, sondern ist mit einer konisch ausgebildeten Übergangsfläche 31 versehen, so dass ein Drehen des Stutzens 13 unter Angriff eines Werkzeuges insoweit ausgeschlossen ist, um einer unbefugten Person, die vandalistische Absichten hegt, als Hemmnis nicht den Zugang zum Behälter- oder Tankinneren zu erlauben.

Gemäß den Fig. 7 und 8 ist ein zweites Ausführungsbeispiel des erfindungsgemäßen Verschluss-Systems nur noch insoweit dargestellt, als dies zum Verständnis erforderlich ist. Im Unterschied zu der vorstehend beschriebenen Lösung weist die Ringnut 17 umfangsseitig und in radialer Richtung eine weitere Vertiefung in Form einer Eingriffsstelle 33 auf. Die dahingehende Eingriffsstelle 33 ist vorzugsweise in der Art einer Bohrung ausgebildet, die sich mindestens einmal im Boden 35 der Ringnut 17 erstreckt. Das der dahingehenden Ausgestaltung nach der Fig. 7 zuordenbare Sperrteil in Form des Riegelgliedes 21 weist an seinem dem Fortsatz 29 gegenüberliegenden Ende eine ebene Stirnfläche auf, mit der das Riegelglied in Form der Stiftschraube 21 mit Außengewinde formschlüssig in die Eingriffsstelle 33 eingreift, um dergestalt in dieser weiteren Eingriffsstellung das Herausdrehen des Stutzens 13 aus der Behälteröffnung zu ermöglichen, in dem über den Deckel 1 und das adapterartige Anschlussteil 9 der Stutzen 13 mit geführt wird. Um den aufgezeigten Kraftschluss bei der Ausgestaltung nach den Fig. 5 und 6 zu verbessern, weist die Stiftschraube 21 bei der Ausgestaltung nach der Fig. 6 an ihren dem Fortsatz 29 gegenüberliegenden Ende einen weiteren Fortsatz in Form des Riegelstiftes 25 auf, der für die dahingehende Mitnahmebewegung sich gemäß der Darstellung nach der Fig. 5 am Boden 35 der Ringnut 17 kraftschlüssig abstützen kann. Wird entgegen der dahingehenden Festlegerichtung die jeweilige Stiftschraube 21 rückgedreht, kommt beim Formschluss das eine freie Ende der Stiftschraube 21 außer Eingriff mit der zusätzlichen Eingriffsstelle 33, und soweit sich das dahingehende freie Ende nicht kraftschlüssig am Boden 35 der Ringnut 17 abstützt, dreht das Anschlussteil 9 gegenüber dem Stutzen 13 durch sobald der Deckel 1 von Hand gedreht wird. Insoweit ist dann im skizzierten Rahmen der Vandalismusschutz erreicht.

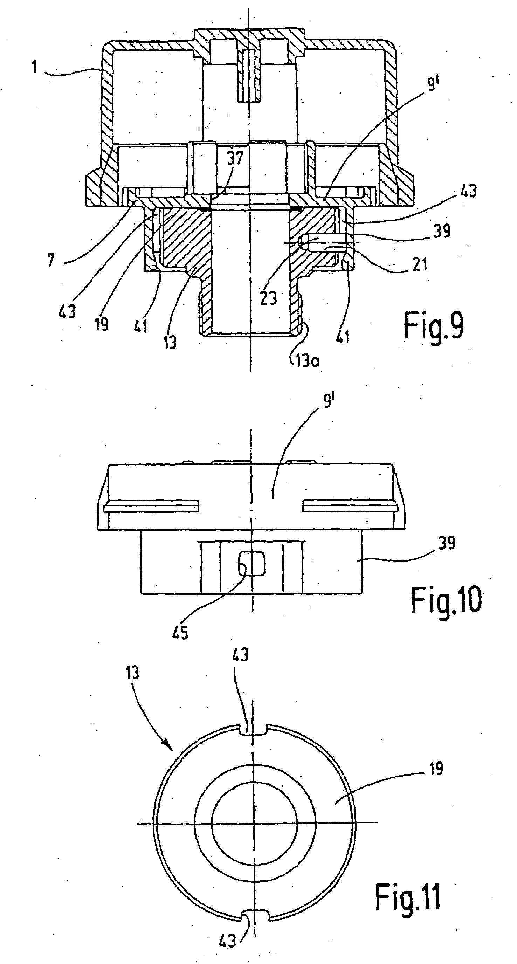

Bei dem weiteren Ausführungsbeispiel des Verschluss-Systemes, das anhand der Fig. 9 bis 12 beschrieben wird, ist ein Anschlussteil 9' abweichender Formgebung vorgesehen. Dieses weist in gleicher Richtung wie bei den zuvor beschriebenen Beispielen einen Flanschteil 7 auf, der randseitig mit dem Deckel 1 verbunden ist und wie bei den vorherigen Beispielen, den Sitz für übliche Belüftungs- und/oder Filtereinrichtungen bildet, die vom Deckel 1 umschlossen sind. Im Unterschied zum zuvor beschriebenen Anschlussteil 9 weist das Anschlussteil 9' jedoch keinen zentralen Fortsatz in Form eines in den Stutzen 13 einsetzbaren Anschlussrohres auf, sondern liegt mit dem Rand einer zentralen Durchgangsöffnung 37 unter Abdichtungen der Stirnfläche des Flansches 19 des Stutzens 13 an. Von der Unterseite des Flanschteiles 7 erstreckt sich ringförmig ein Sicherungsrand 39 der den Flansch 19 des Stutzens 13 umringt, wobei am Sicherungsrand 39 endseits zwei einander diametral gegenüberliegende nach innen vorspringende Sperrnasen 41 angeformt sind, die den unteren Rand des Flansches 19 des Stutzens 13 übergreifen und dass Anschlussteil 9' und damit den Deckel 1 gegen ein Abheben vom Stutzen 13 sichern.

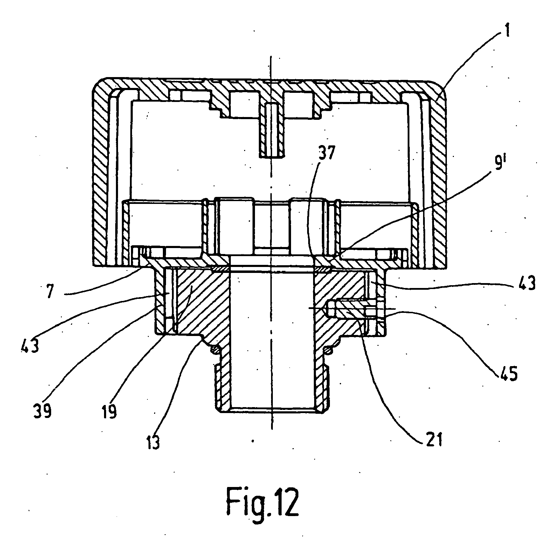

Um jedoch ein gewolltes Abheben zu ermöglichen, d. h. die Verriegelungsanordnung zu lösen, weist der Stutzen 13, wie Fig. 11 zeigt, im Außenumfang zwei einander diametral entgegengesetzte Längsnuten 43 auf. Wird das Anschlussteil 9' relativ zum Flansch 19 des Stutzens 13 in eine solche Drehstellung gebracht, dass die Sperrnasen 41 mit den Längsnuten 43 fluchten, befindet sich das Anschlußteil 9' in seiner Freigabestellung. Fig. 9 zeigt diese Drehstellung. Bei dieser Freigabestellung kann jedoch das Abheben erst dann erfolgen, nachdem zunächst die im Flansch 19 des Stutzens 13 sitzende Stiftschraube 21 entfernt ist, deren äußeres Ende, wie Fig. 9 zeigt, durch Anlage an der Sperrnase 41 das Abheben blockiert. Um die Stiftschraube 21 zu entfernen, muss zunächst das Anschlußteil 9' in die in Fig. 12 gezeigte Stellung gedreht werden, in der die Stiftschraube 21 mit einer im Sicherungsrand 39 vorgesehenen Öffnung 45 (siehe auch Fig. 10) fluchtet und heraus geschraubt werden kann. Wird nun das Anschlußteil 9' in die in Fig. 9 gezeigte Freigabestellung gedreht, kann das Abheben erfolgen.

Der Außenumfang des Flanschteiles 7 ist wiederum mit einer Hemmung für ein Betätigungswerkzeug versehen, insbesondere mit einer glatten Außenumfangsfläche um den Angriff eines Betätigungswerkzeuges, wie einen Gabelschlüssel oder dergleichen, zu vermeiden, um so wirksam einen Vandalismusschutz zu verwirklichen.

Zur Lagefeststellung der jeweiligen Eingriffsstelle 17, 33 dient eine StrichMarkierung 47 am Deckel 1 (Vgl. Fig. 1), die in Deckung bringbar ist mit dem jeweiligen Riegelelement (Stiftschraube 21), das insoweit in der zuordenbaren Aufnahme am Verschluss-System verbleibt und in allen Betätigungsstellungen dort verbleibt. Entgegen einem von außen anzusteckenden Betätigungswerkzeug kann insoweit das Riegelelement nicht verloren gehen und das Ein- und Ausschrauben des Stutzens 13 geschieht ausschließlich von Hand - ohne Einsatz eines Werkzeuges - über Angriff am Deckel 1.

## Patentansprüche

1. Verschluss-System für einen Fluidbehälter, insbesondere Hydrauliktank, mit einem in eine Behälteröffnung einschraubbaren Stutzen (13), einem eine Belüftungs- und/oder Filtereinrichtung (3) umschließenden Deckel (1) und einer letzteren gegen ein ungewolltes Abnehmen von der Behälteröffnung schützenden Sicherheitseinrichtung, **dadurch gekennzeichnet, dass** der Deckel (1) mit einem einen Bestandteil der Belüftungs- und/oder Filtereinrichtung bildenden Anschlussteil (9; 9') verbunden ist, das mit dem Stutzen (13) in Fluidverbindung bringbar oder vom Stutzen (13) abnehmbar ist, und dass als Sicherheitseinrichtung eine das Anschlussteil (9; 9') am Stutzen (13) lösbar sichernde Verriegelungsanordnung (17, 21, 33) vorgesehen ist.

2. Verschluss-System nach Anspruch 1, **dadurch gekennzeichnet, dass** als Sicherheitseinrichtung eine das Anschlussteil (9; 9') am Stutzen (13) gegen ein in Axialrichtung des Stutzens (13) erfolgendes Abheben sichernde Verriegelungsanordnung vorgesehen ist.

3. Verschluss-System nach Anspruch 1 oder 2, **dadurch gekennzeichnet, dass** eine das Anschlussteil (9; 9') kraft- oder formschlüssig sichernde Verriegelungsanordnung vorgesehen ist.

4. Verschluss-System nach Anspruch 2 oder 3, **dadurch gekennzeichnet, dass** das Anschlussteil (9) als Sitz für die Belüftungs- und/oder Filtereinrichtung (3) ein randseitig mit dem Deckel (1) verbundenes Flanschteil (7) aufweist, von dessen dem Deckel (1) abgewandter Seite sich ein zentral gelegenes, in den Stutzen (13) einsetzbares Anschlussrohr (11) erstreckt, und dass in den Außenumfang des Anschlussrohres (11) eine Vertiefung (17) eingearbeitet ist, die für den formschlüssigen Eingriff eines am Stutzen (13) befindlichen Riegelgliedes (21) vorgesehen ist.

5. Verschluss-System nach Anspruch 4, **dadurch gekennzeichnet, dass** als Vertiefung eine umlaufende Ringnut (17) an der Außenseite des Anschlussrohres (11) vorgesehen ist.

6. Verschluss-System nach Anspruch 5, **dadurch gekennzeichnet, dass** der Stutzen (13) an dem dem Anschlussteil (9) zugekehrten Ende einen Flansch (19) aufweist, in dem das Riegelglied (21) derart angeordnet ist, dass es in eine Sperrstellung, in der es in die Ringnut (17) eingreift, und eine Freigabestellung bringbar ist, in der es außer Eingriff mit der Ringnut (17) ist.

7. Verschluss-System nach Anspruch 5, **dadurch gekennzeichnet, dass** als weitere Vertiefung in die umlaufende Ringnut (17) mindestens eine Eingriffsstelle (33), vorzugsweise in Form einer Bohrung, eingebracht ist, in die das Riegelglied (21) in einer Sperrstellung derart eingreift, dass es formschlüssig festgelegt ist.

8. Verschluss-System nach Anspruch 6 oder 7, **dadurch gekennzeichnet, dass** als Riegelglied eine Stiftschraube (21) in einer im Flansch (19) des Stutzens (13) radial durchgehenden, mit der Ringnut (17) des in den Stutzen (13) eingesetzten Anschlussrohres (11) fluchtende Gewindebohrung (23) vorgesehen ist und dass das von außen zugängliche Ende (27, 29) der Stiftschraube (21) eine das ungewollte Herausschrauben erschwerende Formgebung besitzt.

9. Verschluss-System nach Anspruch 2 oder 3, **dadurch gekennzeichnet, dass** das Anschlussteil ein randseitig mit dem Deckel (1) verbundener Ringkörper (9') ist, an dessen dem Deckel (1) abgewandter Seite ein den Außenumfang des Stutzens (13) übergreifender Sicherungsrand (39) angeformt ist, und dass die Verriegelungsanordnung zwischen Stutzen (13) und Sicherungsrand (39) wirksame Blockierelemente (21, 41) zum lösbaren Sichern des Sicherungsrandes (39) gegen ein in Axialrichtung erfolgendes Abnehmen vom Stutzen (13) aufweist.

10. Verschluss-System nach einem der Ansprüche 1 bis 9, **dadurch gekennzeichnet, dass** der Stutzen (13) zwischen Deckel (1) und Eingriffsbereich (13a) des Stutzens (13) in eine Behälteröffnung außenumfangseitig mit einem Hemmnis für ein Betätigungswerkzeug versehen ist, insbesondere mindestens eine konisch ausgebildete Übergangsfläche (31) aufweist.

11. Verschluss-System nach einem der Ansprüche 7 bis 10, **dadurch gekennzeichnet, dass** zur Lagefeststellung der jeweiligen Eingriffsstelle (17, 33) eine Markierung (47) am Deckel (1) dient, die in Deckung bringbar ist mit dem jeweiligen Riegelelement (21).

## Claims

1. A closure system for a fluid vessel, in particular a hydraulic tank, having a nozzle (13) that can be screwed into a vessel opening, a lid (1) surrounding a venting and/or filter device (3) and a safety device protecting the latter from any unintended removal from the vessel opening, **characterised in that** the lid (1) is connected to an attachment part (9; 9') forming a component of the venting and/or filter device which can be brought into fluid connection with the nozzle (13) or can be removed from the nozzle (13), and that a locking arrangement (17, 21, 33) releaseably securing the attachment part (9; 9') onto the nozzle (13) is provided as a safety device.

2. The closure system according to Claim 1, **characterised in that** a locking arrangement securing the attachment part (9; 9') on the nozzle (13) against lifting taking place in an axial direction of the nozzle (13) is provided as a safety device.

3. The closure system according to Claim 1 or 2, **characterised in that** a locking arrangement securing the attachment part (9; 9') with a force fit or form fit is provided.

4. The closure system according to Claim 2 or 3, **characterised in that** the attachment part (9) has a flange part (7) connected on the edge to the lid (1) as a seat for the venting and/or filter device (3) from the side facing away from the lid (1) of which a centrally positioned connecting pipe (11) insertable into the nozzle (13) extends, and that an indentation (17) is made in the outer circumference of the connecting pipe (11) which is provided for the form-fitted engagement of a bolt member (21) located on the nozzle (13).

5. The closure system according to Claim 4, **characterised in that** a circumferential annular groove (17) is provided as an indentation on the outer side of the connecting pipe (11).

6. The closure system according to Claim 5, **characterised in that** the nozzle (13) has on the end facing towards the attachment part (9) a flange in which the bolt member (21) is disposed such that it can be brought into a blocking position in which it engages in the annular groove (17) and into a release position in which it is disengaged from the annular groove (17).

7. The closure system according to Claim 5, **characterised in that** as a further indentation at least one engagement point (33), preferably in the form of a hole, is made in the circumferential annular groove (17) in which the bolt member (21) engages in a blocking position such that it is secured with a form-fit.

8. The closure system according to Claim 6 or 7, **characterised in that** a stud screw (21) in a threaded hole (23) passing radially through the flange (19) of the nozzle (13) and aligned with the annural groove (17) of the connecting pipe (11) inserted into the nozzle (13) is provided as a bolt member, and that the end (27, 29) of the stud screw (21) accessible from the outside is of a form hindering unintentional unscrewing.

9. The closure system according to Claim 2 or 3, **characterised in that** the attachment part is an annular body (9') connected on the edge to the lid (1), on the side facing away from the lid (1) of which a securing edge (39) engaging over the outer circumference of the nozzle (13) is integrally moulded, and that the locking arrangement has blocking elements (21, 41) acting between the nozzle (13) and the securing edge (39) for releaseably securing the securing edge (39) against removal from the nozzle (13) taking place in the axial direction.

10. The closure system according to any of Claims 1 to 9, **characterised in that** the nozzle (13) is provided between the lid (1) and the region (13a) for engagement of the nozzle (13) into a vessel opening on the outer circumferential side with a restraint for an operating tool, and in particular has at least one conically formed crossover surface (31).

11. The closure system according to any of Claims 7 to 10, **characterised in that** marking (47) on the lid (1) serves to determine the position of the respective engagement point (17, 33) which can be brought to cover the respective bolt element (21).

## Revendications

1. Système de fermeture pour un récipient à fluide, notamment pour une cuve hydraulique, comprenant une tubulure (13) pouvant se visser dans une ouverture du récipient, un couvercle (1) entourant un dispositif (3) d'aération et/ou de filtration et un dispositif de sécurité empêchant que ce dernier ne soit retiré involontairement de l'ouverture du récipient, **caractérisé en ce que** le couvercle (1) est assemblé par une partie (9 ; 9') de raccord, formant un élément constitutif d'aération et/ou de filtration et pouvant être mise en communication de fluide avec la tubulure (13) ou pouvant être retirée de la tubulure (13) et **en ce qu'**il est prévu, comme dispositif de sécurité, un dispositif (17, 21, 33) de verrouillage fixant de manière amovible la partie (9 ; 9') de raccordement à la tubulure (13).

2. Système de fermeture suivant la revendication 1, **caractérisé en ce qu'**il est prévu, comme dispositif de sécurité, un dispositif de verrouillage empêchant la partie (9 ; 9') de raccordement à la tubulure (13) d'être soulevée dans la direction axiale de la tubulure (13).

3. Système de fermeture suivant la revendication 1 ou 2, **caractérisé en ce qu'**il est prévu un dispositif de verrouillage fixant la partie (9, 9') de raccordement par complémentarité de force ou par complémentarité de forme.

4. Système de fermeture suivant la revendication 2 ou 3, **caractérisé en ce que** la partie (9) de raccordement a, comme siège pour le dispositif (3) d'aération et/ou de filtration , une partie (7) formant bride, qui est reliée du côté du bord au couvercle (1) et de laquelle s'étend du côté du couvercle un tube (11) de raccordement, disposé de manière centrée et pouvant être inséré dans la tubulure (13) et **en ce que**, dans le pourtour extérieur du tube (11) de raccordement, est usiné une cavité (13) qui est prévue pour la pénétration à complémentarité de forme d'un élément (11) de verrou se trouvant sur la tubulure (13).

5. Système de fermeture suivant la revendication 4, **caractérisé en ce qu'**il est prévu comme cavité une rainure (17) annulaire faisant le tour sur le côté extérieur du tube (11) de raccordement.

6. Système de fermeture suivant la revendication 5, **caractérisé en ce que** la tubulure (13) a, à l'extrémité tournée vers la partie (9) de raccordement, une bride (19) dans laquelle l'élément (21) de verrou est disposé de manière à pouvoir être mis en une position de blocage, dans laquelle il pénètre dans la rainure (17) annulaire, et en une position de dégagement, dans laquelle il n'est pas en prise avec la rainure (17) annulaire.

7. Système de fermeture suivant la revendication 5, **caractérisé en ce qu'**il est ménagé, comme autre cavité, dans la rainure (17) annulaire faisant le tour, au moins un point (33) de pénétration, de préférence sous la forme d'un trou, dans lequel l'élément (21) de verrou pénètre en une position de blocage de manière à être fixé par complémentarité de forme.

8. Système de fermeture suivant la revendication 6 ou 7, **caractérisé en ce qu'**il est prévu, comme élément de verrou, un goujon (21) fileté dans un taraudage (23) traversant radialement la bride (19) de la tubulure (13) et aligné avec la rainure (17) annulaire du tube (11) de raccordement inséré dans la tubulure (13) et **en ce que** l'extrémité (27, 29) accessible de l'extérieur du goujon (21) fileté a une conformation rendant difficile un dévissage involontaire.

9. Système de fermeture suivant la revendication 2 ou 3, **caractérisé en ce que** la partie de raccordement est une pièce (9 ; 9') annulaire qui est assemblée du côté du bord au couvercle (1) au côté éloigné du couvercle (1) et de laquelle est formé un bord (39) de sécurité enjambant le pourtour extérieur de la tubulure (13) et **en ce que** le dispositif de verrouillage a des éléments (21, 41) de blocage efficaces entre la tubulure (13) et le bord (39) de sécurité pour fixer d'une manière amovible le bord (39) de sécurité en l'empêchant d'être retiré de la tubulure (13) dans la direction axiale.

10. Système de fermeture suivant l'une des revendication 1 à 9, **caractérisé en ce que** la tubulure (13) est pourvue, entre le couvercle (1) et la partie (13a) de pénétration de la tubulure (13), dans une ouverture du récipient du côté du pourtour extérieur d'un obstacle à un outil d'actionnement, notamment d'au moins une surface (31) de transition conique.

11. Système de fermeture suivant l'une des revendication 7 à 10, **caractérisé en ce que**, pour la fixation en position du point (17, 33) de pénétration respectif, on se sert d'un repère (47) sur le couvercle (1), qui peut être mis en coïncidence avec l'élément (21) de verrouillage respectif.
